# EUROPEAN PATENT APPLICATION

(11) **EP 1 362 892 A1**
(43) Date of publication of application: **19.11.2003**
(21) Application number: 03252994.3
(22) Date of filing: 14.05.2003
(51) Int. Cl.: C08L 71/02, C08L 83/04, C08K 3/22

(54) **Curable fluoropolyether rubber compositions and rubber articles**

(30) Priority: 14.05.2002 JP 2002138626
(71) Applicant: SHIN-ETSU CHEMICAL CO., LTD., Chiyoda-ku Tokyo (JP)
(72) Inventor: Sato, Shinichi, Shin-Etsu Chemical Co., Ltd., Usui-gun, Gunma-ken (JP); Koike, Noriyuki, Shin-Etsu Chemical Co., Ltd., Usui-gun, Gunma-ken (JP)
(74) Representative: Stuart, Ian Alexander

(57) **Abstract**

A curable fluoropolyether rubber composition comprising (A) a straight-chain fluoropolyether compound having at least two alkenyl groups and a perfluoropolyether structure backbone, (B) an organosilicon compound having at least two silicon atom-bonded hydrogen atoms which all form H-SiCH₂Si structures, (C) cerium oxide, iron oxide or carbon powder, and (D) a hydrosilylation catalyst cures into rubber parts which have good acid resistance, solvent resistance, chemical resistance, weather resistance, parting property, water repellency and oil repellency as well as improved heat resistance.

## Description

This invention relates to curable fluoropolyether rubber compositions, preferred embodiments of which cure into rubbers having one or more of good acid resistance, solvent resistance, chemical resistance, weather resistance, parting property, water repellency and oil repellency as well as improved heat resistance; and rubber articles obtained therefrom.

### BACKGROUND

Japanese Patent No. 2,990,646 (JP-A 8-199070) discloses a composition comprising (A) a straight-chain fluoropolyether compound having at least two alkenyl groups in a molecule and a perfluoroalkyl ether structure in the backbone, (B) an organosilicon compound having at least two H-SiOSi structures in a molecule, and (C) a hydrosilylation catalyst, which cures into parts having a good profile of solvent resistance, chemical resistance, weather resistance, parting property, water repellency, oil repellency and heat resistance.

Although this fluoropolyether rubber composition performs well in most applications, a need for higher acid resistance exists in special applications where chemical resistance is necessary, for example, rubber materials such as sealants for semiconductor manufacturing apparatus, and sealants, O-rings, diaphragms and the like used in potential contact with engine oils.

Using an organosilicon compound having at least two H-SiCH₂Si structures in a molecule instead of the organosilicon compound having at least two H-SiOSi structures in a molecule, such a composition can be improved in acid resistance as proposed in Japanese Patent Appln. No. 2000-196789 (USSN 09/893,603 or EP Application 01305499.4). This composition, however, is sometimes less heat resistant than the composition of Japanese Patent No. 2,990,646.

### SUMMARY OF THE INVENTION

An object of the invention is to provide curable fluoropolyether rubber compositions which when cured preferably exhibit good acid resistance, solvent resistance, chemical resistance, weather resistance, parting property, water repellency and oil repellency as well as improved heat resistance. Another object is to provide rubber articles made therefrom.

It has been found that by compounding a straight-chain fluoropolyether compound having at least two alkenyl groups and a perfluoropolyether structure in the backbone, an organosilicon compound having at least two silicon atom-bonded hydrogen atoms which all form H-SiCH₂Si structures, and a hydrosilylation catalyst, and further compounding therewith cerium oxide, iron oxide or carbon powder, there is obtained a curable fluoropolyether rubber composition which is preferably curable into parts having one or more of good acid resistance, solvent resistance, chemical resistance, weather resistance, parting property, water repellency and oil repellency and improved heat resistance.

In a first aspect, the present invention provides a curable fluoropolyether rubber composition comprising
(A) a straight-chain fluoropolyether compound having at least two alkenyl groups in a molecule and a perfluoropolyether structure in the backbone,
(B) an organosilicon compound having in a molecule at least two silicon atom-bonded hydrogen atoms, which all form H-SiCH₂Si structures,
(C) a metal oxide selected from cerium oxide and iron oxide or a carbon powder, and
(D) a hydrosilylation catalyst.

In a second aspect, the present invention provides a rubber article comprising the curable fluoropolyether rubber composition in the cured state. The rubber article may be suited for use in automobiles, chemical plants, ink jet printers, semiconductor manufacturing lines, analytical or scientific instruments, medical equipment, aircraft or fuel cells, as typified by a diaphragm, valve, O-ring, oil seal, gasket, packing, joint or face seal.

### DESCRIPTION OF THE PREFERRED EMBODIMENT

Component (A) of the curable fluoropolyether rubber composition according to the invention is a straight-chain fluoropolyether compound having at least two alkenyl groups in a molecule and a perfluoropolyether structure, preferably a divalent perfluoroalkyl ether structure in the backbone.

The perfluoroalkyl ether structure may be a structure comprising a multiplicity of recurring units: -C_{d}F_{2d}O wherein d in each unit is independently an integer of 1 to 6, for example, a structure of the following general formula (3):

(C_{d}F_{2d}O)_{q} (3)

wherein q is an integer of 1 to 500, preferably 2 to 400, and more preferably 10 to 200.

The recurring units -C_{d}F_{2d}O- constituting the structure of formula (3) are exemplified by the following units:

-CF₂O-,

-CF₂CF₂O- ,

-CF₂CF₂CF₂O-,

-CF(CF₃)CF₂O-,

- CF₂CF₂CF₂CF₂O-,

-CF₂CF₂CF₂CF₂CF₂CF₂O-,

and

-C(CF₃)₂O-.

Of these, -CF₂O-, -CF₂CF₂O-, -CF₂CF₂CF₂O- and -CF(CF₃)CF₂O- are especially preferred. It is noted that the perfluoroalkyl ether structure may be comprised of such recurring units of one type or a combination of two or more types.

The alkenyl groups in the straight-chain fluoropolyether compound (A) are preferably those groups having 2 to 8 carbon atoms, especially 2 to 6 carbon atoms, and terminated with a CH₂=CH- structure, for example, vinyl, allyl, propenyl, isopropenyl, butenyl, and hexenyl. Of these, vinyl and allyl are preferred. The alkenyl groups may be present as side chains on the backbone, but preferably attached to opposite ends of the molecular chain. In this preferred arrangement, the alkenyl groups may be attached to opposite ends of the straight-chain fluoropolyether compound backbone directly or through a divalent linkage: -CH₂-, -CH₂O-, -CH₂OCH₂- or -Y-NR-CO-. Herein Y is -CH₂- or a group of the following structural formula (Z): 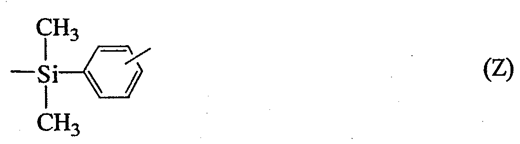 (wherein the free valence bond may be at the o, m or p-position), and R is hydrogen, methyl, phenyl or allyl.

The fluoropolyether compound (A) is preferably a straight-chain one of the following general formula (4) or (5).

CH₂=CH-(X)ₚ-Rf⁰-(X')ₚ-CH=CH₂ (4)

CH₂=CH-(X)ₚ-Q-Rf⁰-Q-(X')ₚ-CH=CH₂ (5)

Herein X is independently -CH₂-, -CH₂O-, -CH₂OCH₂- or -Y-NR-CO- wherein Y is -CH₂- or a group of the following structural formula (Z) and R is hydrogen, methyl, phenyl or allyl,
X' is independently -CH₂-, -OCH₂-, -CH₂OCH₂- or -CO-NR-Y'- wherein Y' is -CH₂- or a group of the following structural formula (Z') and R is hydrogen, methyl, phenyl or allyl,
Rf⁰ is a divalent perfluoropolyether structure, preferably represented by formula (3), that is, (C_{d}F_{2d}O)q,
p is independently 0 or 1, and
Q is a divalent hydrocarbon group of 1 to 15 carbon atoms which may contain an ether bond, such as an alkylene group or an alkylene group containing an ether bond.

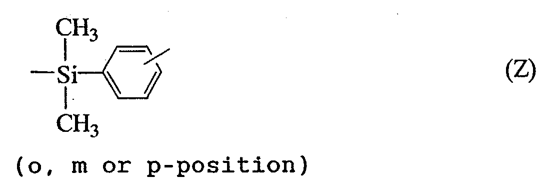

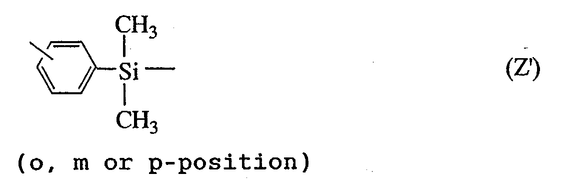

Of these straight-chain fluoropolyether compounds (A), those of the following general formula (1) are preferred. 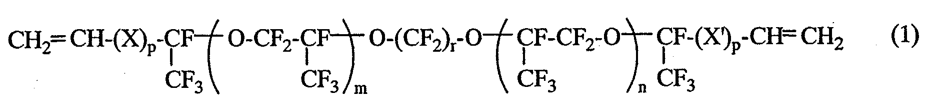 Herein X is independently -CH₂-, -CH₂O-, -CH₂OCH₂- or
-Y-NR-CO- wherein Y is -CH₂- or a group of the following structural formula (Z): 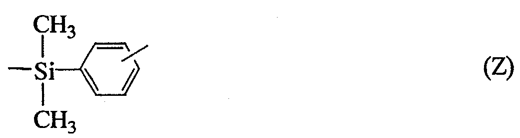 (o, m or p-position), and R is hydrogen, methyl, phenyl or allyl,
X' is independently -CH₂-, -OCH₂-, -CH₂OCH₂- or -CO-NR-Y'- wherein Y' is -CH₂- or a group of the following structural formula (Z'): 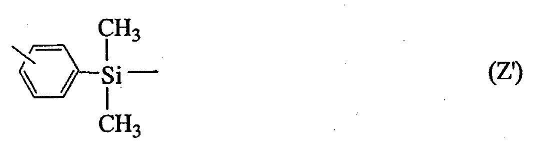 (o, m or p-position), and R is hydrogen, methyl, phenyl or allyl,
p is independently 0 or 1, r is an integer of 2 to 6, and m and n each are an integer of 0 to 200.

Desirably the straight-chain fluoropolyether compounds of formula (1) have a weight average molecular weight of about 4,000 to 100,000, more desirably about 1,000 to 50,000.

Illustrative, non-limiting, examples of the straight-chain fluoropolyether compounds of formula (1) are given below. In the formulas, m and n are as defined above.

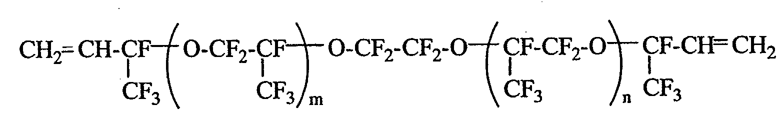

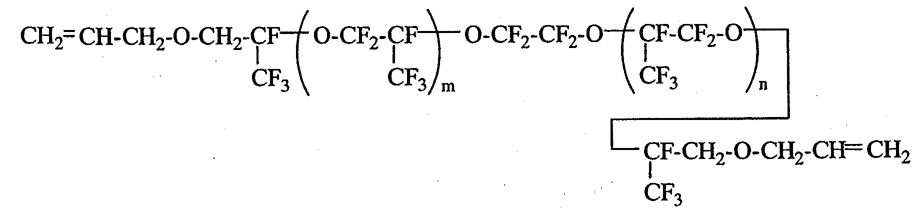

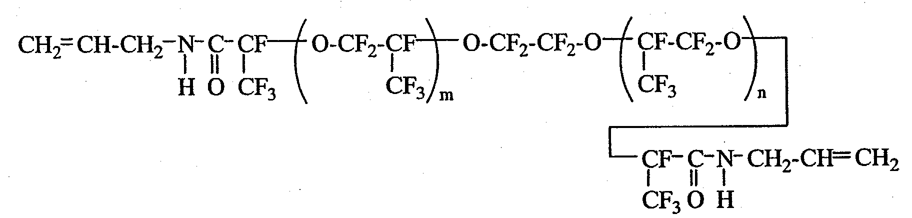

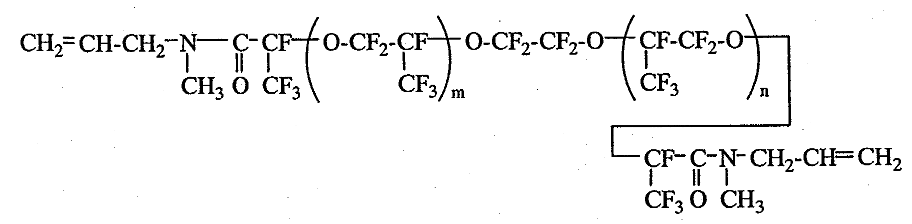

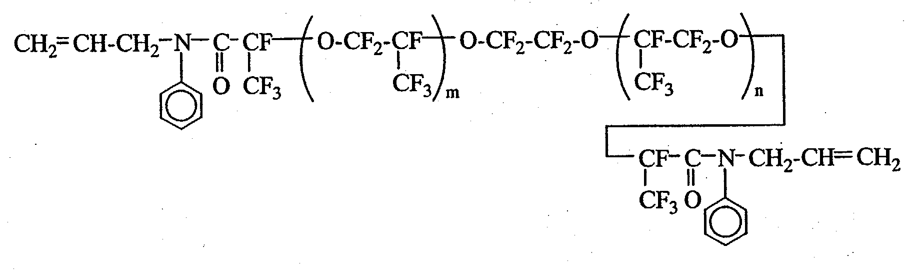

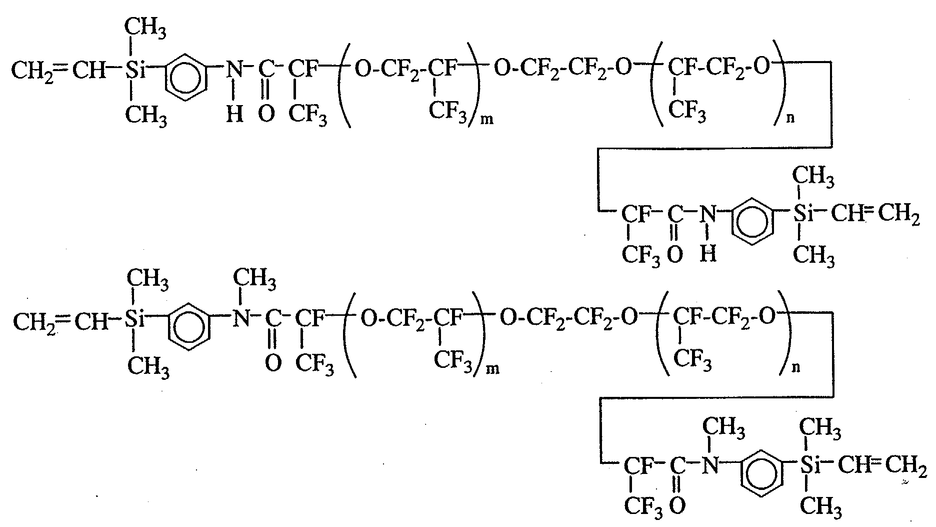

In the practice of the invention, to tailor the straight-chain fluoropolyether compound of formula (1) to a weight average molecular weight desired for a particular purpose, it is possible that the straight-chain fluoropolyether compound be previously subjected to hydrosilylation reaction with an organosilicon compound having two SiH groups in a molecule by a conventional method under ordinary conditions to form a chain-extended product, which can be used as component (A).

Component (B) serves as a crosslinking agent and chain extender for component (A). Any desired organosilicon compound may be used as long as it has at least two silicon atom-bonded hydrogen atoms in a molecule in which every silicon atom-bonded hydrogen atom forms an H-SiCH₂Si- structure. The organosilicon compound is preferably of the following general formula (2). 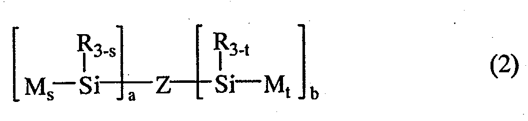 Herein "a" and "b" each are 0 or 1, with the proviso that a and b are not 0 at the same time. Z is hydrogen, -Q-M or -Q- Rf when either one of a and b is 0 and the other is 1; or Z is -Q-, -Rf'- or -Q-Rf'-Q- when both a and b are 1. Q is a divalent hydrocarbon group of 1 to 15 carbon atoms which may contain an ether bond, Rf is a monovalent perfluoroalkyl or perfluorooxyalkyl group, and Rf' is a divalent perfluoroalkylene or perfluorooxyalkylene group.
M is 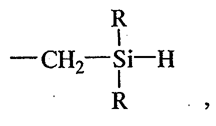 R is independently at each occurrence a monovalent hydrocarbon group of 1 to 20 carbon atoms, s is 1, 2 or 3, and t is 0, 1, 2 or 3.

The hydrocarbon groups represented by R will be described later in detail. Examples of Q include alkylene groups such as methylene, ethylene, propylene and hexylene, and those alkylene groups whose chain is separated by an ether bond (-O-). The monovalent perfluoroalkyl and perfluorooxyalkyl groups represented by Rf and the divalent perfluoroalkylene and perfluorooxyalkylene groups represented by Rf' will also be described later in detail.

Illustrative examples of the organosilicon compound (B) are given below. In the formulas, Me is methyl and Ph is phenyl.

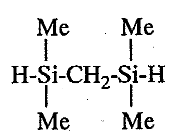

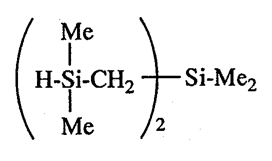

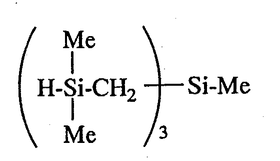

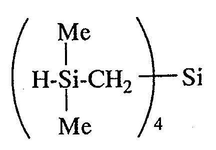

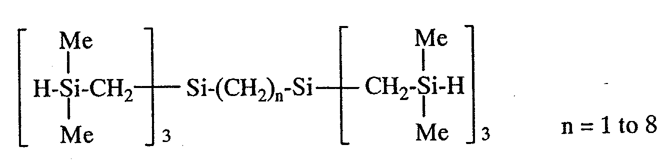

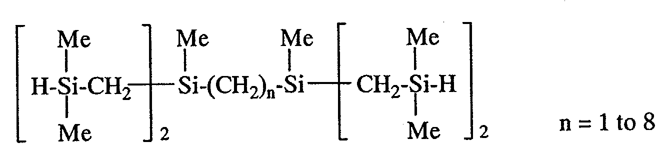

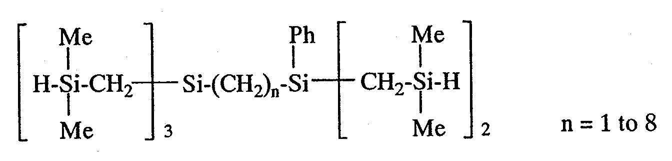

In consideration of compatibility with and dispersibility in component (A) and uniformity after curing, there may be used those organosilicon compounds having at least one monovalent perfluoroalkyl, monovalent perfluorooxyalkyl, divalent perfluoroalkylene or divalent perfluorooxyalkylene group in a molecule.

The perfluoroalkyl, perfluorooxyalkyl, perfluoroalkylene and perfluorooxyalkylene groups are exemplified by those of the following general formulas.
Monovalent perfluoroalkyl:

   C_{g}F_{2g+1}-

   g is an integer of 1 to 20, preferably 2 to 10.
Divalent perfluoroalkylene:

   - C_{g}F_{2g}-

   g is an integer of 1 to 20, preferably 2 to 10.
Monovalent perfluorooxyalkyl: 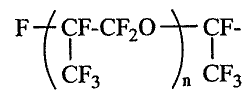 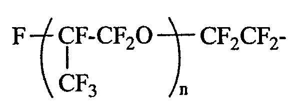 n is an integer of 1 to 5.
Divalent perfluorooxyalkylene:

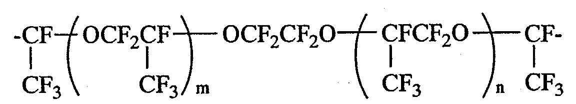

The sum of m+n is an integer of 1 to 200.

- (CF₂O)ₘ- (CF₂CF₂O)ₙ-CF₂-

Each of m and n is an integer of 1 to 50.

These perfluoro(oxy)alkyl and perfluoro(oxy)alkylene groups may be attached to silicon atoms either directly or through divalent linking groups. Such divalent linking groups are alkylene and arylene groups and combinations thereof, which may have an intervening bond such as an ether bond-forming oxygen atom, amide bond, carbonyl bond or the like. Illustratively, divalent linking groups having 2 to 12 carbon atoms are preferred, examples of which are given below.

-CH₂CH₂-

-CH₂CH₂CH₂-

-CH₂CH₂CH₂OCH₂-

-CH₂CH₂CH₂-NH-CO-

-CH₂CH₂CH₂-N(Ph)-CO-

-CH₂CH₂CH₂-N(CH₃)-CO-

-CH₂CH₂CH₂-O-CO-

Note that Ph is phenyl.

In addition to the monovalent organic group containing a mono- or divalent fluorinated substituent, that is, perfluoroalkyl, perfluorooxyalkyl, perfluoroalkylene or perfluorooxyalkylene group, the organosilicon compound (B) has the silicon atom-bonded monovalent substituent R", which is selected from substituted or unsubstituted hydrocarbon groups of 1 to 20 carbon atoms. Exemplary hydrocarbon groups are alkyl groups such as methyl, ethyl, propyl, butyl, hexyl, cyclohexyl, octyl and decyl, alkenyl groups such as vinyl and allyl, aryl groups such as phenyl, tolyl and naphthyl, aralkyl groups such as benzyl and phenylethyl, and substituted ones of the foregoing groups in which some hydrogen atoms are substituted with chlorine atoms, cyano groups or the like, such as chloromethyl, chloropropyl and cyanoethyl.

For the organosilicon compound, the number of silicon atoms per molecule is usually about 2 to about 60, preferably about 3 to about 30, though not limited thereto.

The following examples are also typical of the organosilicon compounds. They may be used alone or in admixture of two or more. Note that Me is methyl and Ph is phenyl.

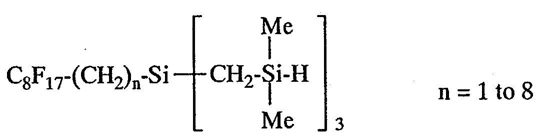

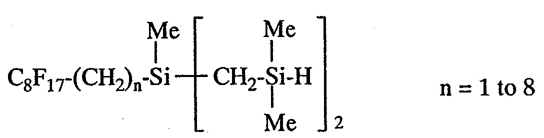

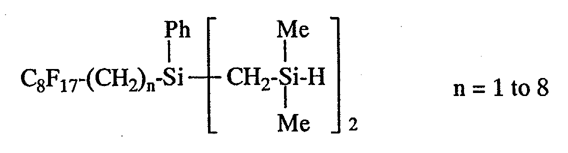

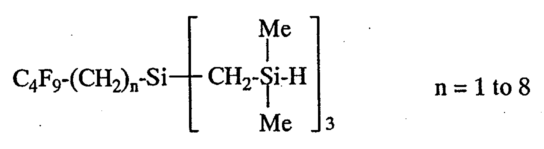

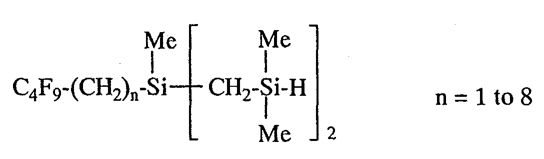

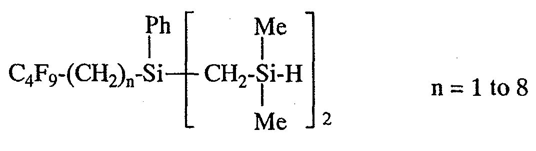

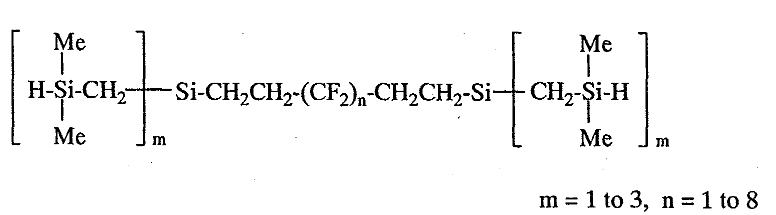

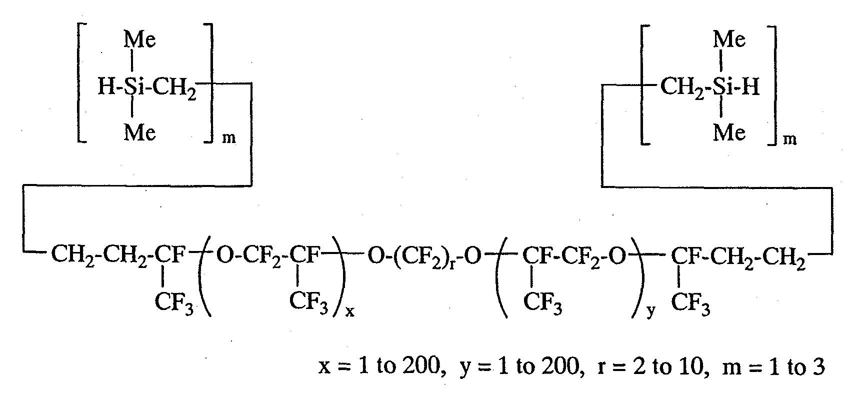

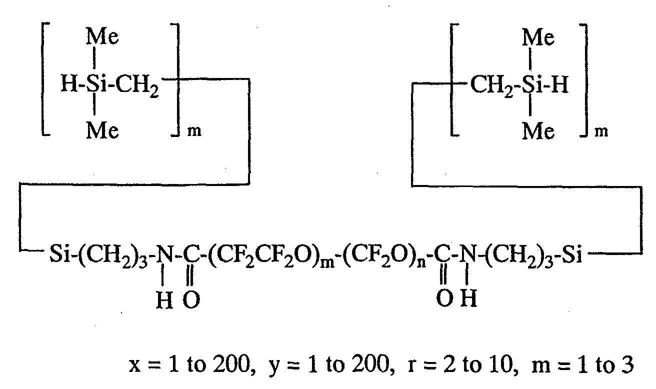

An appropriate amount of component (B) blended is such that 0.5 to 5 mol, especially 1 to 2 mol of hydrosilyl groups (or SiH groups) in component (B) are available per mol of alkenyl groups (e.g., vinyl, allyl and cycloalkenyl) in component (A). Less amounts of component (B) may achieve an insufficient degree of crosslinking whereas excessive amounts of component (B) may allow chain lengthening to become preferential, inviting short curing and foaming, and aggravating heat resistance, compression set and the like.

Component (C) is a carbon powder or a metal oxide selected from cerium oxide and iron oxide, which serves as a heat resistance improver in the inventive composition. An appropriate amount of component (C) blended is 0.1 to 10.0 parts by weight, preferably 0.3 to 3.0 parts by weight per 100 parts by weight of component (A), though not critical.

Component (D) is a hydrosilylation catalyst, which is typically selected from transition metals, for example, platinum group metals such as Pt, Rh and Pd and compounds of these transition metals. Because these compounds are generally expensive noble metal compounds, the invention favors the use of platinum compounds which are readily available.

Exemplary platinum catalysts are chloroplatinic acid, complexes of chloroplatinic acid with olefins such as ethylene, and complexes of chloroplatinic acid with alcohols and vinylsiloxane, as well as platinum on silica, alumina and carbon, though not limited thereto.

Platinum group metal compounds other than the platinum compounds include rhodium, ruthenium, iridium and palladium compounds, for example, RhCl(PPh₃)₃, RhCl(CO)(PPh₃)₂, RhCl(C₂H₄)₂, Ru₃(CO)₁₂, IrCl(CO)(PPh₃)₂, and Pd(PPh₃)₄ wherein Ph is phenyl.

The amount of the catalyst used is not critical and a catalytic amount may achieve a desired curing rate. From the economical standpoint and to obtain satisfactory cured parts, the catalyst amount is preferably about 0.1 to 1,000 ppm, more preferably about 0.1 to 500 ppm of platinum group metal based on the entire curable composition.

In addition to component (B), the curable composition of the invention may have another crosslinking agent and chain extender for component (A). Specifically, an organosilicon compound having in a molecule at least two SiH structures not corresponding to component (B), typically H-Si-OSi structures, may be blended in any desired proportion for ease of working and tailoring rubber physical properties. Such a SiH-bearing organosilicon compound not corresponding to component (B) is not critical as long as it has at least two SiH groups in a molecule. It may have a chain, cyclic or network structure.

Where an organosilicon compound having hydrosilyl groups or SiH groups is added as a crosslinking agent and chain extender for component (A) in addition to component (B), the amount of this additional organosilicon compound is preferably such that the total amount of SiH groups (available from component (B) and additional organosilicon compound) is 0.5 to 5 mol, especially 1 to 2 mol per mol of alkenyl groups (e.g., vinyl, allyl and cycloalkenyl) in component (A). Less amounts of SiH groups may achieve an insufficient degree of crosslinking whereas excessive amounts of SiH groups may allow chain lengthening to become preferential, inviting short curing and foaming, and aggravating heat resistance, compression set and the like.

The proportion of component (B) to the additional organosilicon compound having SiH structures is not critical and may be set as appropriate depending on a particular application.

If desired, various additives may be added to the inventive curable composition for improving its practical usage. For instance, polysiloxanes containing CH₂=CH(R)SiO units wherein R is hydrogen or a substituted or unsubstituted monovalent hydrocarbon group (see JP-B 48-10947) and acetylene compounds (see USP 3,445,420 and JP-B 4-3774) are added for the purpose of controlling the curing rate of the curable compositions. Other useful additives are ionic compounds of heavy metals (see USP 3,532,649).

To the curable composition of the invention, fillers may be added for the purposes of reducing thermal shrinkage upon curing, reducing the coefficient of thermal expansion of the cured elastomer, improving thermal stability, weather resistance, chemical resistance, flame retardance or mechanical strength, and/or lowering the gas permeability. Exemplary additives include fumed silica, quartz flour, glass fibers, carbon, metal oxides such as titanium oxide, and metal carbonates such as calcium carbonate and magnesium carbonate. If desired, suitable pigments and dyes are added.

The method of preparing the curable composition according to the invention is not critical. The composition may be prepared simply by mixing the above-described components. The composition may be formulated as two parts, one part consisting of component (A) and components (C) and (D) and the other part consisting of components (A) and (B), which are to be combined together on use. For the composition to cure, room temperature cure is possible depending on the type of functional group in component (A) and the type of catalyst (D) although a common, preferred practice is to heat the composition at about 100 to 200°C for several minutes to several hours for curing.

On use, depending on its particular application and purpose, the curable composition may be dissolved in a suitable fluorochemical solvent, for example, 1,3-bistrifluoromethylbenzene or perfluorooctane in a desired concentration before it is applied.

The curable fluoropolyether rubber composition of the invention is useful in a variety of applications. Rubber articles made of the cured composition include
rubber parts for automobiles, for example, diaphragms such as fuel regulator diaphragms, pulsation damper diaphragms, oil pressure switch diaphragms, and EGR diaphragms, valves such as canister valves and power control valves, O-rings such as quick connector O-rings and injector O-rings, and seals such as oil seals and cylinder head gaskets;
rubber parts for chemical plants, for example, pump diaphragms, valves, O-rings, packings, oil seals, and gaskets;
rubber parts for ink jet printers and semiconductor manufacturing lines, for example, diaphragms, valves, O-rings, packings, and gaskets;
rubber parts for analytical and scientific instruments and medical equipment, for example, pump diaphragms, O-rings, packings, valves, and joints;
tent film materials, sealants, molded parts, extruded parts, coatings, copier roll materials, electrical moisture-proof coatings, sensor potting materials, fuel cell seals, laminate rubber fabrics; and
rubber parts for aircraft, for example, O-rings, face seals, packings, gaskets, diaphragms, and valves in fluid piping for engine oil, jet fuel, hydraulic oil and Skydrol® .

### EXAMPLE

Examples of the invention are given below by way of illustration and not by way of limitation. The viscosity (centistoke) is a measurement at 25°C. All parts are by weight. Me is methyl.

### Example 1

To 100 parts of a polymer of the formula: 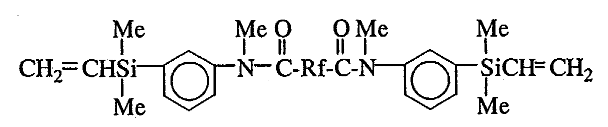 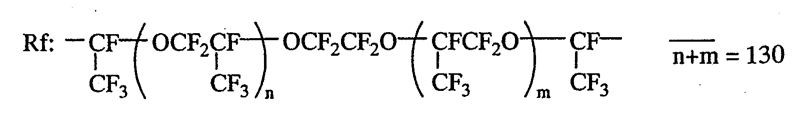 (viscosity 8,500 cs, average molecular weight 22,000, and vinyl content 0.009 mol/100 g) were added 20 parts of dimethylsiloxy-treated fumed silica having a specific surface area of 200 m²/g and 0.5 part of carbon powder. They were mixed, heat treated and milled on a three-roll mill. To the mixture were added 2.64 parts of a fluorinated organosilicon compound of the formula: 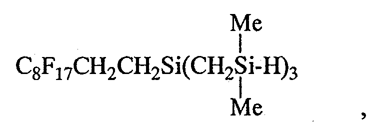 0.2 part of a toluene solution of a catalyst in the form of chloroplatinic acid modified with CH₂=CHSiMe₂OSiMe₂CH=CH₂ (platinum concentration 1.0 wt%), and 0.4 part of a 50% toluene solution of ethynyl cyclohexanol. They were mixed to give composition I. It was deaerated in vacuum, placed in a rectangular frame of 2 mm deep, deaerated again, and press cured at 100 kg/cm² and 150°C for 10 minutes. From the cured sample, a specimen was cut out and measured for physical properties according to JIS K-6251 and 6253. The results are shown below.

| | |
|---|---|
| Hardness (Durometer type A) | 41 |
| Elongation | 520% |
| Tensile strength | 10.3 MPa |

The specimen was also examined for heat resistance, chemical resistance, solvent swell, and low-temperature property. The results are shown in Table 1 to 4.

### Example 2

Composition II was prepared as in Example 1 except that 1.0 part of ferric oxide powder was added instead of the carbon powder in Example 1. As in Example 1, a cured sheet was obtained from composition II. A specimen was cut therefrom and measured for physical properties according to JIS K-6251 and 6253. The results are shown below.

| | |
|---|---|
| Hardness (Durometer type A) | 42 |
| Elongation | 500% |
| Tensile strength | 10.6 MPa |

### Example 3

Composition III was prepared as in Example 1 except that 1.0 part of cerium oxide powder was added instead of the carbon powder in Example 1. As in Example 1, a cured sheet was obtained from composition III. A specimen was cut therefrom and measured for physical properties according to JIS K-6251 and 6253. The results are shown below.

| | |
|---|---|
| Hardness (Durometer type A) | 40 |
| Elongation | 540% |
| Tensile strength | 10.9 MPa |

### Comparative Example

Composition IV was prepared as in Example 1 except that the carbon powder in Example 1 was omitted. As in Example 1, a cured sheet was obtained from composition IV. A specimen was cut therefrom and measured for physical properties according to JIS K-6251 and 6253. The results are shown below.

| | |
|---|---|
| Hardness (Durometer type A) | 42 |
| Elongation | 540% |
| Tensile strength | 10.4 MPa |

The specimens of compositions II, III and IV were also examined for heat resistance, with the results shown in Table 1.

**Table 1:**

| Heat resistance (200°C) | | | | | |
|---|---|---|---|---|---|
| | Composition | Physical properties | Initial | 14 days | 28 days |
| Example 1 | I | Hardness (Durometer type A) | 41 | 40(-1) | 40(-1) |
| | | Elongation (%) | 520 | 500(-4) | 490(-6) |
| | | Tensile strength (MPa) | 10.3 | 10.1(-2) | 10.0(-3) |
| | | Heat loss | - | 0.3 | 0.5 |
| Example 2 | II | Hardness (Durometer type A) | 42 | 40(-2) | 39(-3) |
| | | Elongation (%) | 500 | 490(-2) | 500(±0) |
| | | Tensile strength (MPa) | 10.6 | 10.2(-4) | 10.1(-5) |
| | | Heat loss | - | 0.5 | 0.7 |
| Example 3 | III | Hardness (Durometer type A) | 40 | 37(-3) | 37(-3) |
| | | Elongation (%) | 540 | 500(-7) | 490(-9) |
| | | Tensile strength (MPa) | 10.9 | 10.5(-4) | 10.2(-6) |
| | | Heat loss | - | 0.5 | 0.8 |
| Comparative Example | IV | Hardness (Durometer type A) | 42 | 36(-6) | 34(-8) |
| | | Elongation (%) | 540 | 400(-26) | 320(-41) |
| | | Tensile strength (MPa) | 10.4 | 9.2(-12) | 8.1(-22) |
| | | Heat loss | - | 1.5 | 2.6 |
| Note: The numeral in parentheses indicates a percent relative to the initial value while the numeral in parentheses in terms of hardness indicates an increase or decrease of points. | | | | | |

Compositions I, II and III exhibit good heat resistance as compared with composition IV.

**Table 2:**

| Chemical resistance (change of rubber hardness) | | |
|---|---|---|
| Chemicals | Example 1 | |
| | Composition I | |
| | Hardness | Surface state |
| Initial | 41 | |
| Conc. hydrochloric acid | 42 (+1) | unchanged |
| Conc. sulfuric acid | 39 (-2) | unchanged |
| Conc. hydrofluoric acid | 37 (-4) | unchanged |
| Trifluoroacetic acid | 38 (-3) | unchanged |
| 40% aqueous KOH solution | 41 (±0) | unchanged |
| Note: The numeral in parentheses indicates an increase or decrease of points. Degradation conditions are 20°C and 3 days. | | |

**Table 3:**

| Solvent swell (volume change %) | | | |
|---|---|---|---|
| Solvent | Composition I | Viton GFLT | FE61 |
| gasoline | +10 | + 5 | + 42 |
| methanol | + 2 | + 16 | + 1 |
| chloroform | +12 | + 12 | + 23 |
| acetone | + 7 | +148 | +177 |
| toluene | + 7 | + 10 | + 30 |
| IPA | +4 | + 1 | + 1 |
| acetonitrile | + 1 | + 46 | + 3 |
| MEK | +15 | +150 | +194 |
| ethyl acetate | +13 | +150 | +172 |
| THF | +18 | +149 | +204 |
| n-hexane | + 7 | + 2 | + 18 |
| Carbon tetrachloride | +10 | + 4 | + 27 |
| Viton GFLT: fluoro-elastomer by E. I. Dupont FE61: fluorosilicone rubber by Shin-Etsu Chemical Co., Ltd. | | | |

**Table 4:**

| Low-temperature property (German torsion test) | | | |
|---|---|---|---|
| | Composition I | Viton E-60C | KE951 |
| T₂ | -36° C | - 6° C | -41° C |
| T₅ | -47° C | -11° C | -43° C |
| T₁₀ | -53° C | -14° C | -44° C |
| T₁₀₀ | -61° C | -20° C | -50°C |
| Viton E-60C: fluoro-elastomer by E. I. Dupont KE951: silicone rubber by Shin-Etsu Chemical Co., Ltd. | | | |

### Example 4

A composition V was prepared as in Example 1 except that a polymer of the formula: 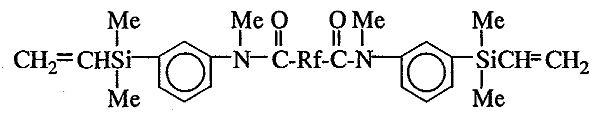 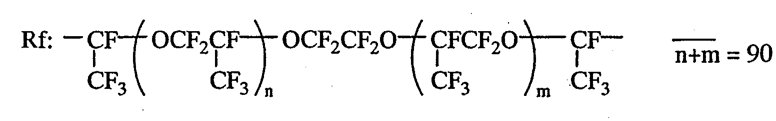 (viscosity 5,300 cs, average molecular weight 17,000, and vinyl content 0.012 mol/100 g) was used instead of the polymer in Example 1 and the amount of the fluorinated organosilicon compound was changed to 3.53 parts. As in Example 1, a cured sheet was obtained from this composition. A specimen was cut therefrom and measured for physical properties according to JIS K-6251 and 6253. The results are shown below.

| | |
|---|---|
| Hardness (Durometer type A) | 46 |
| Elongation | 410% |
| Tensile strength | 9.8 MPa |

### Example 5

A composition VI was prepared as in Example 1 except that 100 parts of a polymer of the formula: 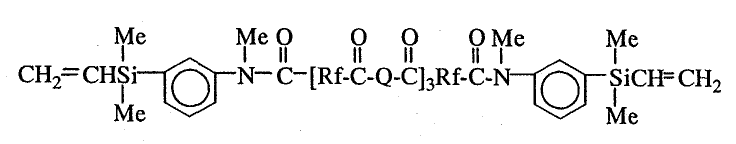 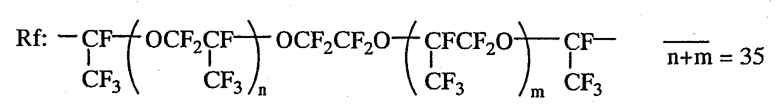 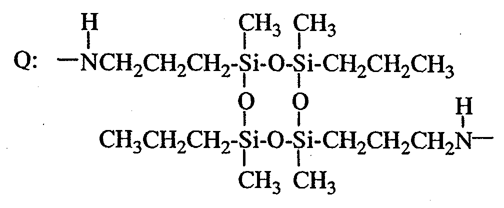 (viscosity 136,000 cs, average molecular weight 23,300, and vinyl content 0.008 mol/100 g) was used instead of the polymer in Example 1 and the amount of the fluorinated organosilicon compound was changed to 2.30 parts. As in Example 1, a cured sheet was obtained from this composition. A specimen was cut therefrom and measured for physical properties according to JIS K-6251 and 6253. The results are shown below.

| | |
|---|---|
| Hardness (Durometer type A) | 37 |
| Elongation | 570% |
| Tensile strength | 11.2 MPa |

### Example 6

A composition VII was prepared as in Example 1 except that 2.10 parts of a fluorinated organosilicon compound of the formula: 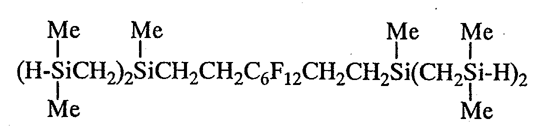 was used instead of the fluorinated organosilicon compound In Example 1. As in Example 1, a cured sheet was obtained from this composition. A specimen was cut therefrom and measured for physical properties according to JIS K-6251 and 6253.
The results are shown below.

| | |
|---|---|
| Hardness (Durometer type A) | 58 |
| Elongation | 300% |
| Tensile strength | 9.2 MPa |

The specimens of compositions V, VI and VII were examined for heat resistance, with the results shown in Table 5.

**Table 5:**

| Heat resistance (200°C) | | | | | |
|---|---|---|---|---|---|
| | Composition | Physical properties | Initial | 14 days | 28 days |
| Example 4 | V | Hardness (Durometer type A) | 46 | 45(-1) | 44(-2) |
| | | Elongation (%) | 410 | 380(-7) | 380(-7) |
| | | Tensile strength (MPa) | 9.8 | 9.5(-3) | 9.2(-6) |
| | | Heat loss | - | 0.2 | 0.3 |
| Example 5 | VI | Hardness (Durometer type A) | 37 | 35(-2) | 34(-3) |
| | | Elongation (%) | 570 | 530(-7) | 510(-11) |
| | | Tensile strength (MPa) | 11.2 | 10.7(-4) | 10.4(-7) |
| | | Heat loss | - | 0.5 | 0.8 |
| Example 6 | VII | Hardness (Durometer type A) | 58 | 57(-1) | 56(-2) |
| | | Elongation (%) | 300 | 280(-7) | 270(-9) |
| | | Tensile strength (MPa) | 9.2 | 8.9(-3) | 8.8(-4) |
| | | Heat loss | - | 0.3 | 0.4 |
| Note: The numeral in parentheses indicates a percent relative to the initial value while the numeral in parentheses in terms of hardness indicates an increase or decrease of points. | | | | | |

Compositions V, VI and VII exhibit good heat resistance as compared with composition IV.

There have been described curable fluoropolyether rubber compositions which cure into rubber products having good acid resistance, solvent resistance, chemical resistance, weather resistance, parting property, water repellency and oil repellency as well as improved heat resistance.

## Claims

1. A curable fluoropolyether rubber composition comprising
(A) a straight-chain fluoropolyether compound having at least two alkenyl groups in a molecule and a perfluoropolyether structure in the backbone,
(B) an organosilicon compound having in a molecule at least two silicon atom-bonded hydrogen atoms, which all form H-SiCH₂Si structures,
(C) a metal oxide selected from cerium oxide and iron oxide or a carbon powder, and
(D) a hydrosilylation catalyst.

2. The composition of claim 1 wherein component (A) is a straight-chain fluoropolyether compound of the following general formula (1): 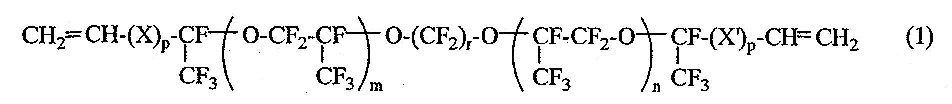 wherein X is independently -CH₂-, -CH₂O-, -CH₂OCH₂- or -Y-NR-CO- wherein Y is -CH₂- or a group of the following structural formula (Z): 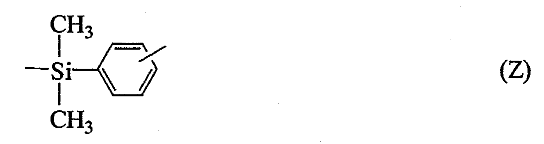 (o, m or p-position), and R is hydrogen, methyl, phenyl or allyl,
X' is independently -CH₂-, -OCH₂-, -CH₂OCH₂- or -CO-NR-Y'- wherein Y' is -CH₂- or a group of the following structural formula (Z'): 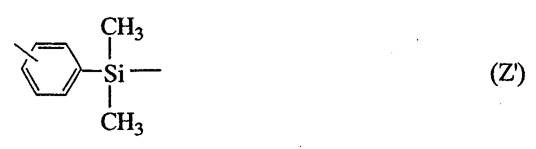 (o, m or p-position), and R is hydrogen, methyl, phenyl or allyl,
p is independently 0 or 1, r is an integer of 2 to 6, and m and n each are an integer of 0 to 200.

3. The composition of claim 1 or 2 wherein component (B) is an organosilicon compound of the following general formula (2): 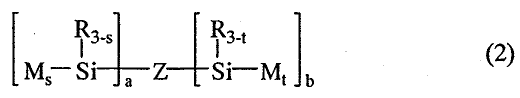 wherein a and b each are 0 or 1, with the proviso that a and b are not 0 at the same time,
Z is hydrogen, -Q-M or -Q-Rf when either one of a and b is 0 and the other is 1, or Z is -Q-, -Rf'- or -Q-Rf'-Q- when both a and b are 1, wherein Q is a divalent hydrocarbon; group of 1 to 15 carbon atoms which may contain an ether bond, Rf is a monovalent perfluoroalkyl or perfluorooxyalkyl group, and Rf' is a divalent perfluoroalkylene or perfluorooxyalkylene group,
M is 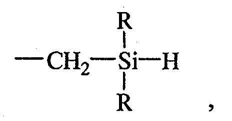 R is independently at each occurrence a monovalent hydrocarbon group of 1 to 20 carbon atoms,
s is 1, 2 or 3, and t is 0, 1, 2 or 3.

4. A rubber article comprising the curable fluoropolyether rubber composition of claim 1, 2 or 3 in the cured state.

5. The rubber article of claim 4 for use in automobiles, chemical plants, ink jet printers, semiconductor manufacturing lines, analytical or scientific instruments, medical equipment, aircraft or fuel cells.

6. The rubber article of claim 4 or 5 which is a diaphragm, valve, O-ring, oil seal, gasket, packing, joint or face seal.
